Europäisches Patentamt

European Patent Office

Office européen des brevets

(11) Numéro de publication: **0 249 803**
**B1**

(12) **FASCICULE DE BREVET EUROPEEN**

(45) Date de publication du fascicule du brevet: **14.11.90**

(51) Int. Cl.⁵: **B 23 Q 15/22**

(21) Numéro de dépôt: **87108003.2**

(22) Date de dépôt: **03.06.87**

(54) **Dispositif pour la commande de la vitesse d'avance d'un outil vers une pièce à usiner.**

(30) Priorité: **11.06.86 FR 8608534**

(43) Date de publication de la demande:
**23.12.87 Bulletin 87/52**

(45) Mention de la délivrance du brevet:
**14.11.90 Bulletin 90/46**

(84) Etats contractants désignés:
**CH DE GB IT LI**

(56) Documents cités:
**FR-A-2 287 679**
**FR-A-2 306 791**

(73) Titulaire: **MESELTRON S.A.**
**Avenue Beauregard 14/18**
**CH-2035 Corcelles (CH)**

(72) Inventeur: **Wegmann, Heinz**
**Rümelbachstrasse 17**
**CH-8153 Rümlang (CH)**

(74) Mandataire: **de Raemy, Jacques et al**
**ICB Ingénieurs Conseils en Brevets SA Passage**
**Max. Meuron 6**
**CH-2001 Neuchâtel (CH)**

EP 0 249 803 B1

Courier Press, Leamington Spa, England.

## Description

La présente invention est relative à un dispositif pour commander la vitesse d'avance d'un outil d'une machine-outil au cours de sa phase d'approche d'une pièce à usiner et pour réduire cette vitesse dès que l'outil est entré en contact avec la pièce, dispositif comprenant un capteur acoustique susceptible de détecter le signal émis à l'instant dudit contact, un circuit électronique de traitement dudit signal et un moteur obéissant audit circuit pour régler la vitesse d'avance dudit outil.

En régle générale, l'approche d'un outil de la pièce à travailler dans les machines-outils est réalisée avec une vitesse relativement élevée afin de réduire autant que possible les temps morts de la machine. Cependant, lorsque l'outil vient en contact avec la pièce à travailler, il convient de réduire très rapidement cette vitesse d'avance élevée pour éviter des détériorations tant de l'outil que de la pièce à travailler.

On connaît donc depuis longtemps des dispositifs utilisés notamment dans les meuleuses ou les rectifieuses qui comportent un capteur acoustique, de préférence de type piézo-électrique, destiné à détecter l'émission acoustique qui est engendrée lorsque la meule touche la pièce à travailler, le signal ainsi obtenu étant utilisé, aprés amplification, pour réduire, le cas échéant jusqu'à zéro, la vitesse relativement élevée utilisée lors de la phase d'approche.

Un tel dispositif est décrit par exemple dans le brevet CH-A-585 609 où le capteur est fixé sur le bâti de la machine ou plus exactement sur le support de la pièce à usiner.

Il en est de méme du dispositif proposé dans le brevet FR-A-2 382 310. Ici un capteur de vibration est monté sur la réglettesupport de la pièce à usiner dans une machine du type centerless.

Toutefois ces dispositifs connus présentent un inconvénient qui consiste en ce que le bruit inhérent engendré par l'outil lorsqu'il vient en contact avec la pièce à travailler ne se différencie que très peu en intensité et en fréquence des bruits parasites produits par la machine, par exemple des bruits des paliers, des engrenages, des organes d'entraînement pneumatiques ou hydrauliques etc., si bien que le bon fonctionnement du dispositif ne peut pas toujours être assuré.

Il a également été proposé de monter le capteur sur une des touches de mesure d'un système d'autocalibrage, les dites touches étant en contact direct avec la pièce à usiner. Cependant ce contact est alors très ponctuel si l'on veut mesurer avec précision le diamètre de cette pièce, d'où il s'ensuit que ces touches transmettront mal le bruit que l'on cherche à détecter. Par ailleurs sur certaines machines pourvues d'un système d'autocalibrage, on retarde la mise en place desdites touches afin de prévenir leur usure. Il n'est donc pas certain que ces touches soient en contact avec la pièce au moment de l'attaque de l'outil d'usinage.

Pour éviter les inconvénients cités plus haut, la présente invention est caractérisée par le fait que le capteur est solidaire d'un palpeur fixé sur le bâti de la machine au moyen d'organes amortisseurs élastiques, ledit palpeur étant arrangé pour être en contact avec la pièce à usiner ou le porte-pièce de ladite pièce à usiner.

L'invention sera mieux comprise maintenant à la lecture de la description qui va suivre, donnée uniquement à titre d'exemple et faite en se référant au dessin dans lequel:

La figure 1 montre un schéma simplifié d'une meuleuse-rectifieuse sur laquelle est monté le dispositif suivant l'invention,

La figure 2 est un dessin schématique, vu en coupe, d'un premier mode d'exécution de l'invention,

La figure 3 est un dessin schématique, vu en coupe, d'un second mode d'exécution de l'invention,

La figure 4 est une vue de dessus de la machine équipée du dispositif de l'invention selon l'un ou l'autre mode d'exécution apparaissant aux figures 2 et 3 respectivement.

La figure 5 est également une vue de dessus de la machine où le dispositif, selon ses deux modes d'exécution, est appliqué à un cas particulier de pièce à usiner.

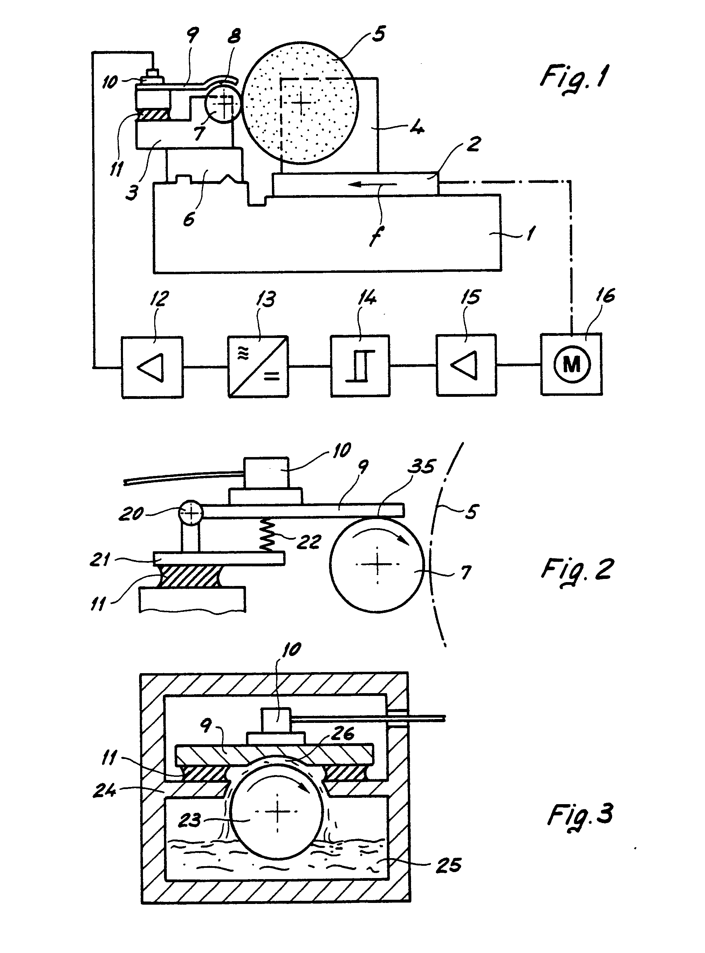

On a représenté sur la figure 1 le bâti 1 d'une meuleuse-rectifieuse. Ce bâti supporte un premier chariot 2 déplaçable en translation selon la fléche f et ceci à l'aide d'un moteur d'entraînement 16. Le chariot 2 comporte lui-méme un support d'outil 4 sur lequel est montée à rotation autour d'un axe horizontal, une meule 5.

Le bâti 1 supporte également un second chariot 6 déplaçable en translation selon une direction perpendiculaire au plan de la figure et ce chariot porte un support 3 pour une pièce à usiner 7. Selon l'invention, un palpeur 9, en contact avec la pièce à usiner 7, est monté sur le bâti de la machine au moyen d'organes amortisseurs élastiques 11. Le contact peut être direct, ou indirect comme cela apparaît à la figure 1. Ici un interface 8 est interposé entre le palpeur 9 et la pièce à usiner 7. L'interface 8 constitue une caractéristique secondaire de l'invention et sera décrit plus bas. Le palpeur est pourvu d'un capteur 10 qui y est rigidement fixé. Le capteur 10 est capable de détecter dans le palpeur 9 de l'énergie acoustique constituée par des vibrations. Des capteurs piézo-électriques fabriqués par exemple, par la société allemande Endevco peuvent convenir.

Quand la meule 5 entre en contact avec la pièce à usiner 7, le palpeur 9 transmet au capteur 10 un signal acoustique représentatif de ce contact et qui est transformé par le capteur en signal électrique. Ce signal électrique est envoyé à un circuit électronique de traitement dudit signal qui comporte un amplificateur 12, un redresseur 13 et un comparateur 14. Le comparateur compare le signal de sortie du redresseur à un signal de référence et, si le signal de sortie est plus grand que le signal de référence, le comparateur émet un signal qui commande à son tour un circuit de puissance 15 qui assure la commande du moteur 16 et permet notamment d'en réduire la vitesse. Ce système d'asservissement est connu et a déjà été décrit dans les brevets cités plus haut. Il n'y a pas donc nécessité d'y revenir ici.

Essentiellement l'invention consiste à mettre en oeuvre un palpeur 9 qui se trouve en liaison avec la pièce à usiner et qui transmet le bruit ou les vibrations engendrés par le contact de la meule 5 avec ladite pièce et à isoler ledit palpeur 9 du bâti de la machine au moyen d'un amortisseur 11, ce qui empêche que des bruits parasites n'atteignent le palpeur et par conséquent le capteur 10 qui lui est solidaire. Ainsi le bruit engendré par l'entrée en contact de l'outil avec la pièce à usiner suit-il un chemin direct entre la source de bruit et le palpeur-capteur sans devoir passer par des paliers ou roulements comme ce serait le cas si le capteur était fixé sur le bâti de la machine ou le chariot supportant la pièce à usiner. L'invention permet également une mesure qui est effectuée à proximité presque immédiate de la source de bruit, ce qui est très favorable et rejette ainsi les bruits parasites dans un bruit de fond de faible amplitude.

On examinera maintenant deux modes d'exécution particuliers qui entrent dans le cadre de la présente invention et pour lesquels les mêmes numéros de référence sont utilisés lorsqu'il s'agit de désigner les éléments ayant les mêmes fonctions que celles décrites à propos de la figure 1.

Le premier mode d'exécution est présenté à la figure 2 où l'on reconnaît la meule 5, la pièce à usiner 7, le palpeur 9, le capteur 10 et l'organe amortisseur 11. Ici le palpeur 9 est en contact avec la pièce à usiner 7 à l'endroit 35. Solidaire de ce palpeur on retrouve le capteur de bruit 10. Le palpeur est articulé en 20 sur un support 21 lui-même fixé au bâti de la machine par l'intermédiaire de l'organe élastique 11. La force d'appui du palpeur 9 sur la pièce 7 peut être réglée par un ressort de rappel 22. Dans le cas présenté à la figure 2, le contact est direct entre la pièce et le palpeur.

Si l'on fait appel à un liquide de refroidissement pour l'opération de meulage, la pièce 7 va s'entourer d'un interface constitué de ce liquide entre le palpeur 9 et ladite pièce 7. Comme ce liquide est excellent conducteur de bruit, le signal d'impact de la meule avec la pièce sera également transmis au capteur. L'utilisation de ce liquide, en plus qu'il se justifie pour le travail d'usinage, est avantageux pour le dispositif objet de l'invention. En effet il supprime l'usure du palpeur, il minimise fortement le bruit de 5 frottement et enfin il augmente la surface d'appui, ce qui est favorable pour une bonne transmission du bruit.

Dans le cas où il n'y a pas de liquide de refroidissement, tout au moins dans la région où se trouve le palpeur, on pourrait créer l'interface entre palpeur et pièce en revêtant le palpeur d'un métal antifriction par exemple.

La figure 3 est un dessin schématique vu en coupe d'un second mode d'exécution de l'invention. Ici le palpeur 9 est en contact non avec la pièce à usiner mais avec le porte-pièce 23 de ladite pièce à usiner. Cette façon de faire présente l'avantage d'un système plus universel puisque le palpeur n'a pas à être adapté chaque fois aux dimensions de la pièce à usiner.

Dans cette exécution le palpeur 9, duquel est solidaire le capteur acoustique 10, se trouve fixé au bâti 24 entourant le porte-pièce 23 au moyen des organes amortisseurs 11. En tournant, le porte-pièce 23, entraîne autour de lui l'huile de graissage 25 des paliers (non représentés). Il y a donc contact acoustique entre le porte-pièce 23 et le palpeur 9 par l'intermédiaire du film d'huile situé en 26. Comme pour l'exécution précédente, les amortisseurs 11 empêchent que des bruits parasites ne soient transmis au palpeur et, partant, au capteur de bruit. Le bruit d'impact entre la pièce à usiner et l'outil est transmis d'abord à la pièce puis au portepièce par l'intermédiaire de pinces de serrage (non représentées) et enfin au palpeur par le film 26.

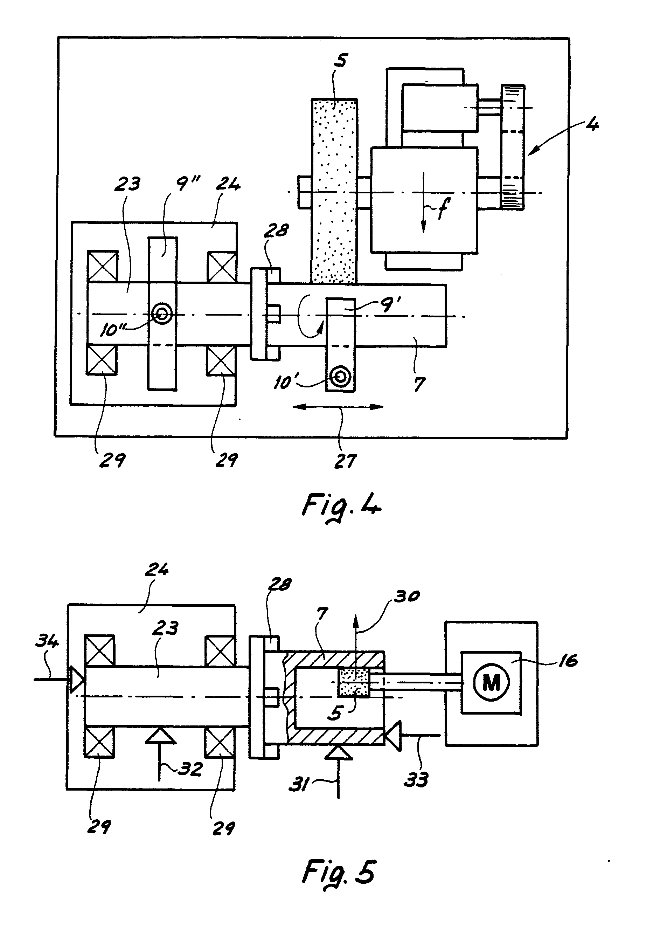

La figure 4 est une vue de dessus de la machine équipée du dispositif selon l'un ou l'autre mode d'exécution discuté précédemment. Il s'agit d'un dessin schématique montrant le principe général du dispositif selon l'invention. On reconnaît la meule 5, le support de meule 4 contenant des moyens d'entraînement de la meule, ainsi que des moyens de déplacement selon le sens de la flèche f. La pièce à usiner 7 est fixée à un porte-pièce 23 au moyen de pinces 28. Le porte-pièce tourne sur des paliers 29 et le tout est enfermé dans un bâti 24. Bâti 24 et pièce 7 peuvent se mouvoir dans le sens de la flèche 27. Selon le premier mode d'exécution le palpeur et le capteur sont situés en 9' et 10' respectivement. Selon le second mode d'exécution, palpeur et capteur se trouvent respectivement en 9" et 10"

La figure 5 montre schématiquement une machine à usiner des diamètres intérieurs. Ainsi dans la pièce 7 peut pénétrer une meule 5 entraînée en rotation par un moteur. Une fois en position, la meule 5 peut approcher rapidement la pièce 7 dans le sens de la flèche 30 jusqu'à ce que le contact soit établi. A ce moment la vitesse d'approche est réduite. La vitesse d'avance de la meule dans le sens de la flèche 30 est réglée par un moteur 16, lui-même commandé par le dispositif selon l'invention. La pièce à usiner 7 est entraînée en rotation par le porte-pièce 23, tournant dans des paliers 29. Selon les modes d'exécution décrits le palpeur peut être appliqué soit en 31 soit en 32. En variante, on pourrait appliquer le palpeur en bout de pièce (33) ou en bout de porte-pièce (34).

Pour que les bruits parasites en provenance de la machine ne parviennent pas au palpeur, des organes amortisseurs élastiques supportent le palpeur. Ces organes peuvent être des tampons en matériau élastique dont les extrémités s'appuient respectivement sur le bâti de la machine et sur le palpeur. Les tampons que l'on vend couramment sous la dénomination de silent-blocks conviennent bien à cet usage.

## Revendications

1. Dispositif pour commander la vitesse d'avance d'un outil (5) d'une machine-outil au cours de sa phase d'approche d'une pièce à usiner (7) et pour réduire cette vitesse dés que l'outil est entré en contact avec la pièce, dispositif comprenant un capteur acoustique (10) susceptible de détecter le signal émis à l'instant dudit contact, un circuit électronique (12, 13, 14, 15) de traitement dudit signal et un moteur (16) obéissant audit circuit pour régler la vitesse d'avance dudit outil, caractérisé par le fait que le capteur est solidaire d'un palpeur (9) fixé sur le bâti de la machine au moyen d'organes amortisseurs élastiques (11), ledit palpeur étant arrangé pour être en contact avec la pièce à usiner (7) ou le porte-pièce (23) de ladite pièce à usiner.

2. Dispositif selon la revendication 1, caractérisé par le fait que les organes amortisseurs élastiques (11) sont des tampons en matériau élastique dont les extrémités s'appuient respectivement sur le bâti de la machine et sur le palpeur.

3. Dispositif selon la revendication 1, caractérisé par le fait que le palpeur (9) est en contact mécanique direct avec la pièce à usiner (7).

4. Dispositif selon la revendication 1, caractérisé par le fait que le palpeur (9) est en contact mécanique indirect avec la pièce à usiner (7) ou le porte-pièce (23) de ladite pièce à usiner, un interface (8, 26) étant inteposé entre ledit palpeur et ladite pièce ou ledit porte-pièce.

5. Dispositif selon la revendication 4, caractérisé par le fait que l'interface (8) est le liquide de refroidissement utilisé pour l'usinage de la pièce et que le palpeur (9) est en contact avec ladite pièce (7) par l'intermédiaire dudit liquide.

6. Dispositif selon la revendication 4, caractérisé par le fait que l'interface (26) est l'huile utilisée pour le graissage du porte-pièce (23) et que le palpeur (9) est en contact avec ledit porte-pièce par l'intermédiaire de ladite huile.

## Patentansprüche

1. Vorrichtung zum Steuern der Vorschubgeschwindigkeit eines Werkzeugs (5) einer Werkzeugmaschine während seiner Annäherungsphase an ein Werkstück (7) und zum Reduzieren dieser Geschwindigkeit, sobald das Werkzeug mit dem Werkstück in Kontakt gelangt ist, welche Vorrichtung einen akustischen Aufnehmer (10) umfaßt, empfindlich zum Erfassen des Signals, das im Augenblick des Kontakts erzeugt wird, einen elektronischen Schaltkreis (12, 13, 14, 15) zur Verarbeitung des Signals sowie einen Motor (16) umfaßt, gesteuert von dem Schaltkreis zum Einstellen der Vorschubgeschwindigkeit des Werkzeugs, dadurch gekennzeichnet, daß der Aufnehmer mit einem Fühler (9) verbunden ist, der auf dem Grundrahmen der Maschine mittels elastischer Dämpfungsorgane (11) befestigt ist, welcher Fühler ausgebildet ist zum Kontaktieren des Werkstücks (7) oder des Trägerstücks (23) des Werkstücks.

2. Vorrichtung nach Anspruch 1, dadurch gekennzeichnet, daß die elastischen Dämpfungsorgane (11) Blöcke aus elastischem Material sind, deren Enden an dem Maschinenrahmen bzw. dem Fühler anliegen.

3. Vorrichtung nach Anspruch 1, dadurch gekennzeichnet, daß der Fühler (9) in direktem mechanischen Kontakt mit dem Werkstück (7) steht.

4. Vorrichtung nach Anspruch (1), dadurch gekennzeichnet, daß der Fühler (g) in indirektem mechanischen Kontakt mit dem Werkstück (7) oder dem Werkstückträger (23) des Werkstücks steht, wobei eine Schnittstelle (8, 26) zwischen dem Fühler und dem Werkstück oder dem Werkstückträger angeordnet ist.

5. Vorrichtung nach Anspruch 4, dadurch gekennzeichnet, daß die Schnittstelle (8) die Kühlflüssigkeit ist, die für die Bearbeitung des Werkstücks verwendet wird und daß der Fühler (g) in Kontakt mit dem Werkstück (7) über diese Flüssigkeit steht.

6. Vorrichtung nach Anspruch 4, dadurch gekennzeichnet, daß die Schnittstelle (26) das Öl ist, das für die Schmierung des Werkstückträgers (23) verwendet wird und daß der Fühler (9) in Kontakt mit dem Werkstückträger über dieses Öl steht.

## Claims

1. Arrangement for controlling the speed of advance of the tool part (5) of a machine tool during its approach phase toward a workpiece (7) and for reducing said speed as soon as the tool part has come into contact with the workpiece comprising an acoustic sensor (10) adapted to detect the signal emitted at the instant of said contact, an electronic circuit (12, 13, 14, 15) for processing said signal and a motor (16) responding to the circuit so as to regulate the speed of advance of said tool part, characterized by the fact that the sensor is fastened to a feeler (9) mounted on the machine framework by means of elastic shock absorbing elements (11), said feeler being arranged to be in contact with the workpiece (7) or the carrier (23) of said workpiece.

2. Arrangement according to claim 1, characterized by the fact that the elastic shock absorbing elements (11) comprise buffers of elastic material the ends of which are supported respectively on the machine framework and the feeler.

3. Arrangement according to claim 1, characterized by the fact that the feeler (9) is in direct mechanical contact with the workpiece (7).

4. Arrangement according to claim 1, characterized by the fact that the feeler (9) is in indirect mechanical contact with the workpiece (7) or the carrier (23) of said workpiece, there being an interface (8, 26) interposed between said feeler and said workpiece or said carrier.

5. Arrangement according to claim 4, characterized by the fact that the interface (8) comprises a cooling liquid employed during machining of the workpiece and that the feeler (9) is in contact with said workpiece (7) through said liquid.

6. Arrangement according to claim 4, characterized by the fact that the interface (26) comprises oil used for lubrification of the carrier (23) and that the feeler (9) is in contact with said carrier through said oil.

EP  0 249 803  B1

Fig.1

Fig.2

Fig.3

1

Fig. 4

Fig. 5